# FASCICULE DE BREVET EUROPEEN

(11) **EP 2 938 512 B1**
(45) Date de publication et mention de la délivrance du brevet: **06.05.2020**
(21) Numéro de dépôt: 13821892.0
(22) Date de dépôt: 26.12.2013
(51) Int. Cl.: B60L 5/18

(54) **DETECTION D'AVARIE D'UNE BANDE DE CAPTAGE**
ERKENNUNG VON DEFEKTEN IN EINEM SAMMLUNGSSTREIFEN
DETECTION OF A FAILURE IN A COLLECTION STRIP

(30) Priorité: 27.12.2012 FR 1262864
(43) Date de publication de la demande: 04.11.2015
(73) Titulaire: Mersen France Amiens SAS, 80080 Amiens (FR)
(72) Inventeur: BASUYAU-ESTRANGIN, Benoît, 80000 Amiens (FR)
(74) Mandataire: Fédit-Loriot
(86) Numéro de dépôt international: PCT/FR2013/053268
(87) Numéro de publication internationale: WO 2014/102508

(56) Documents cités:
- EP-A1- 0 462 909
- EP-A1- 0 872 374
- DE-A1-102009 047 757
- DE-A1-102009 047 757

## Description

L'invention concerne la détection d'avarie d'une bande de captage d'un dispositif de transmission de courant entre deux éléments mobiles l'un par rapport à l'autre, par exemple un élément roulant et un fil de caténaire. L'invention peut ainsi trouver des applications dans le domaine du transport ferroviaire en particulier.

La transmission de courant est habituellement assurée par une bande de carbone frottant sur un élément alimenté en courant, par exemple un fil caténaire, ou bien encore un rail. La bande de carbone peut ainsi être montée sur un pantographe afin de frotter sur le fil caténaire ou bien sur un patin afin de frotter sur un rail. Ce rail peut être un troisième rail s'ajoutant aux deux rails en contact avec les roues de l'élément roulant.

Classiquement, la bande est maintenue dans un étrier qui assure un renfort mécanique, et l'ensemble bande plus étrier est vissé à un support.

Un dispositif de détection d'avarie de la bande de captage peut permettre de détecter une éventuelle rupture de la bande de captage due à un choc. Ce dispositif peut comprendre un tube étanche réalisé en métal, en carbone ou autre. Ce tube est rempli d'air sous pression. Lorsqu'une avarie survient, le tube peut se rompre et la diminution de pression conséquente peut être détectée. Suite à cette détection, un pantographe est alors abaissé afin d'éviter tout endommagement de la caténaire.

Le document EP 0 462 909 décrit ainsi un exemple de dispositif de détection d'avarie connu de l'art antérieur. Le document DE102009047757 est un autre exemple d'un tel dispositif.

Il existe un besoin pour un dispositif de détection d'avarie plus efficace.

Il est proposé un dispositif de détection d'avarie d'une bande de captage d'un dispositif de transmission de courant entre deux éléments mobiles l'un par rapport à l'autre, comprenant un tube réalisé en un matériau rigide conçu pour contenir un fluide sous pression lorsque fermé. Ce tube est destiné à être fixé entre la bande de captage et un moyen de support de cette bande, l'ensemble formé par la bande de captage, le tube et le moyen de support étant destiné à être monté sur l'un des éléments mobiles de façon à ce que l'intérieur de ce tube soit alors en communication fluide avec des moyens de détection d'une variation de pression.

Selon l'invention, le tube présente au moins une discontinuité créant un amincissement local de l'épaisseur de ce tube conformément aux caractéristiques de la revendication 1.

Ainsi, on vient créer une faiblesse mécanique qui peut permettre de contrôler davantage la résistance mécanique du tube et donc de s'assurer que ce tube cassera à un moment plus adéquat que dans l'art antérieur, et/ou lorsque ce tube sera soumis à une valeur recherchée de charge mécanique.

En effet, avec les tubes d'épaisseur constante de l'art antérieur, en carbone ou en métal, il existe un risque de rupture trop précoce, par exemple en cas de choc relativement faible ou d'endommagement mineur de la bande de captage, et/ou de rupture trop tardive. Il existe même un risque d'absence de rupture alors que la bande de captage n'est de fait plus utilisable, par exemple, en cas d'arrachement de matière relativement conséquent.

Il a été envisagé d'adapter les dimensions du tube puisque ces dimensions influencent directement la résistance mécanique de ce tube. Toutefois, ces dimensions dépendent des caractéristiques automatiques du pantographe et de la limite d'usure requise par l'opérateur. En insérant des défauts contrôlés sur le tube, la résistance mécanique de ce tube est réduite et est relativement facile à contrôler, par exemple en modifiant les différents paramètres du défaut du type dimension, densité, ou autre.

Par fluide sous pression, on entend un fluide ayant une pression supérieure à la pression de l'air ambiant (une atmosphère), par exemple de 2 à 10 bars, par exemple de 7 bars. Ce fluide sous pression peut par exemple être un gaz, par exemple de l'air.

Les moyens de détection de variation de pression, par exemple un capteur de type manomètre ou autre, peuvent être commercialisés séparément du dispositif de détection d'avarie. Notamment, ces moyens de détection de pression peuvent être intégrés à un élément mobile de type pantographe.

Alternativement, on pourrait prévoir d'intégrer les moyens de détection de pression au dispositif de détection d'avarie et/ou à un dispositif de transmission de courant comprenant par ailleurs la bande de captage, le tube et le moyen de support. Dans ce cas, le tube peut être rempli de fluide sous pression avant l'installation du dispositif de transmission de courant sur le pantographe.

Il est en outre proposé un dispositif de transmission de courant entre deux éléments mobiles l'un par rapport à l'autre comprenant :
- une bande de captage destinée à frotter contre l'un des éléments mobiles,
- un moyen de support, par exemple un étrier, sur lequel est monté la bande de captage, destiné à être solidarisé à l'autre élément mobile,
- un dispositif de détection d'avarie tel que décrit ci-dessus, dans lequel le tube est fixé entre la bande de captage et le moyen de support, et est raccordable à des moyens de détection d'une variation de pression.

On prévoit ainsi un tube réalisé en un matériau rigide, conçu pour contenir un fluide sous pression et destiné à être raccordé à des moyens de détection d'une variation de pression. Le dispositif est agencé de sorte que le tube est fixé entre la bande de captage et le moyen de support. Le tube présente au moins une discontinuité créant un amincissement local de l'épaisseur de ce tube.

Il est en outre proposé un système de transmission de courant comprenant le dispositif décrit ci-dessus, ainsi que l'élément mobile auquel est solidarisé le moyen de support, par exemple un pantographe.

Le tube peut comprendre un ou deux orifices, par exemple définis à une/aux extrémité(s) du tube, ou bien définis dans l'épaisseur du tube. Le dispositif et/ou système de transmission de courant peut comprendre un ou deux moyens de raccordement pour le ou les orifice(s) du tube. Les moyens de raccordement peuvent par exemple comprendre un conduit, souple ou rigide, passant au travers du moyen de support de la bande de captage, un raccord entre ce conduit et le tube, au niveau d'un orifice correspondant du tube, et un embout à l'autre extrémité de ce conduit. Le conduit peut ainsi s'étendre entre le tube et l'élément mobile, par exemple le pantographe.

Le raccord peut comprendre un connecteur ou un aménagement étanche intégré à la bande.

Les embouts des conduits peuvent coopérer avec des embouts de l'élément mobile, par exemple du pantographe.

Les embouts des conduits peuvent être mâles ou femelles, afin de se conformer aux embouts de l'élément mobile, ces embouts étant respectivement femelle ou mâle. On peut alternativement prévoir deux embouts identiques (par exemple mâles) reliés entre eux par un raccord double (par exemple femelle).

Préalablement à la fermeture au niveau de l'un des embouts, on peut prévoir d'injecter du fluide dans l'ensemble formé par le tube, les raccords, les conduits et les embouts, de façon à pressuriser l'intérieur du tube, puis de fermer l'embout du pantographe sur cet embout.

Le tube peut comprendre un seul orifice pour établir une communication fluide avec un conduit, ou bien plusieurs.

Le tube peut être disposé de façon à s'étendre sur une partie au moins de la longueur de la bande de captage, et, avantageusement sur toute la longueur de la bande de captage.

Le tube est en laiton.

L'invention n'est pas non plus limitée par la forme, les dimensions, la disposition, la densité de la ou des discontinuité(s).

Par exemple, la discontinuité peut avoir une forme de rainure, par exemple une rainure longitudinale s'étendant sur une partie au moins de la longueur du tube, une rainure circulaire inscrite dans une section du tube, cette section étant perpendiculaire à la direction longitudinale du tube ou inclinée par rapport à cette direction, une rainure hélicoïdale, ou autre.

L'invention n'est pas non plus limitée par la forme de la section de la rainure elle-même. La rainure peut par exemple avoir une section arrondie, rectangulaire, carrée, en V, ou autre.

Cette au moins une discontinuité peut par exemple comprendre une ou plusieurs rainures formant des motifs. Par exemple, on peut prévoir une ou des entaille(s) circulaire(s).

De manière générale, l'invention n'est pas limitée par le choix d'une rainure. On pourrait par exemple prévoir des trous non débouchant creusés dans le tube, ces trous ayant des formes rondes, ovales, carrées, triangulaires, rectangulaires ou d'autres formes moins régulières.

L'invention n'est pas non plus limitée par la disposition de la ou des discontinuités. On pourrait par exemple prévoir de répartir des rainures sensiblement rectilignes et ayant des orientations aléatoires, ou pseudo-aléatoires sur une partie au moins de la longueur du tube. De la même façon, on pourrait prévoir de creuser des trous non débouchant sur une partie au moins de la longueur du tube.

L'invention n'est pas non plus limitée par la largeur de la rainure ou par le diamètre du trou non débouchant. On peut par exemple prévoir des rainures relativement étroites, par exemple de dimensions inférieure ou égale à 2mm pour la largeur (tout en étant supérieures à 0,01 mm), ou bien encore des rainures plus larges. Ainsi, on pourrait prévoir d'amincir localement le tube sur une portion de sa longueur, par exemple 0,5 cm, 1 cm ou autre. On crée ainsi une faiblesse permettant une rupture plus précoce que dans l'art antérieur.

Les discontinuités peuvent par exemple avoir une largeur inférieure au centimètre, et avantageusement inférieure à 2 mm avantageusement supérieure à 0,01 mm.

Les discontinuités peuvent avoir une profondeur d'entaille supérieure à 0,1 mm, et avantageusement supérieure à 0,25 mm, avantageusement inférieure à 2 mm.

L'épaisseur restante du tube peut avantageusement être supérieure à 0,15 mm, avantageusement à 0,30 mm, tout en étant avantageusement inférieure à 2 mm.

On peut envisager que le tube ait une épaisseur de paroi variant entre 0,1 mm et 1,1 mm, avantageusement inférieure ou égale à 1 mm. Dans ce cas, avantageusement et de façon non limitative, pour au moins une discontinuité, l'épaisseur restante peut varier entre 0,20 mm et 0,33 mm, avantageusement entre 0,25 mm et 0,32 mm, par exemple 0,3 mm.

Avantageusement et de façon non limitative, pour au moins une discontinuité, l'épaisseur restante varie entre 0,15 mm et 0,8 mm, avantageusement entre 0,20 mm et 0,60 mm.

La profondeur de la discontinuité peut par exemple représenter entre 30 et 90% de l'épaisseur du tube, avantageusement entre 40 et 80%. Dit autrement, l'amincissement local peut représenter entre 10% et 70% de l'épaisseur du tube, avantageusement entre 20% et 60%.

Avantageusement et de façon non limitative, le tube peut être conformé de sorte que l'épaisseur de matériau restant au niveau de de la ou des discontinuité(s) représente entre 50 et 60% de l'épaisseur nominale du tube, avantageusement entre 50 et 58%, avantageusement entre 50 et 55%.

Avantageusement et de façon non limitative, l'épaisseur restante varie entre 0,20 et 0,40 mm, avantageusement entre 0,30 et 0,325 mm.

Avantageusement et de façon non limitative, l'épaisseur du tube est entre 0.3 mm et 2 mm, ces valeurs étant incluses, avantageusement, entre 0.5 mm et 1 mm, ces valeurs étant incluses.

Pour au moins une discontinuité, l'amincissement local peut correspondre à une épaisseur comprise entre 0,1 mm et 0,6 mm, ces valeurs étant incluses, avantageusement entre 0,2 mm et 0,5 mm, ces valeurs étant incluses.

Dans un mode de réalisation, le tube peut avoir :
- un diamètre intérieur compris entre 1 mm et 6 mm, avantageusement entre 2 et 4,9 mm, par exemple 4,8 mm ; et
- un diamètre extérieur compris entre 2 et 7 mm, avantageusement entre 3 et 6,5 mm, par exemple entre 5,5 et 6,3 mm, par exemple 6 mm.

Dans ce mode de réalisation, le tube est relativement fin, et pourra être utilisé pour la détection d'impact principalement.

Dans ce mode de réalisation, pour au moins une discontinuité, l'épaisseur restante peut varier entre 0,15 mm et 0,35 mm, avantageusement entre 0,25 mm et 0,33 mm, par exemple entre 0,30 et 0,325 mm.

Dans ce mode de réalisation, le tube peut par exemple être réalisé en laiton.

Dans un autre mode de réalisation, le tube peut avoir :
- un diamètre intérieur compris entre 6 mm et 10 mm, avantageusement entre 6,5 et 9 mm, par exemple 7 mm ; et
- un diamètre extérieur compris entre 7 et 15 mm, avantageusement entre 7,8 et 8,8 mm, par exemple 8 mm.

Dans cet autre mode de réalisation, le tube a des dimensions plus élevées, et pourra être utilisé pour la détection d'impact et pour la détection d'usure.

Dans cet autre mode de réalisation, pour au moins une discontinuité, l'épaisseur restante peut varier entre 0,15 mm (ou avantageusement 0,16 mm) et 0,8 mm, avantageusement entre 0,18 mm et 0,40 mm, par exemple entre 0,20 et 0,35 mm, par exemple 0,25 mm ou 0,30 mm.

L'invention n'est pas non plus limitée par le nombre de discontinuités introduites. On pourra prévoir une seule entaille, ou bien plusieurs entailles.

L'invention n'est pas non plus limitée par les dimensions de l'espacement entre ces deux entailles circulaires. On peut prévoir un décolletage compris entre 1 mm et 1 cm, par exemple de 2 mm, ou bien un espacement plus élevé, de l'ordre de la dizaine de centimètres par exemple compris entre 5 cm et 50 cm.

Avantageusement, le tube est réalisé en laiton. De façon surprenante, il a été observé que le choix de ce matériau permettait d'obtenir une meilleure reproductibilité des conditions de rupture.

La ou les discontinuités introduites peuvent avantageusement être vides, mais on pourrait prévoir de remplir ces évidements avec un matériau différent des matériaux du tube, par exemple un caoutchouc ou autre. L'amincissement local du tube concerne simplement le matériau du tube lui-même.

Avantageusement, le matériau différent utilisé pour le remplissage peut avoir une résistance au choc inférieure à cette du matériau du tube.

Avantageusement et de façon non limitative, le tube peut définir au moins deux rainures circulaires sur une section dudit tube, lesdites rainures étant espacées de moins d'un centimètre.

Avantageusement et de façon non limitative, pour au moins une discontinuité, l'amincissement local peut représente entre 50% et 60% de l'épaisseur du tube.

Avantageusement et de façon non limitative, pour au moins une discontinuité, l'amincissement local peut représenter entre 50% et 55% de l'épaisseur du tube.

L'invention sera mieux comprise en référence aux figures, lesquelles illustrent des modes de réalisation non limitatifs.
La figure 1 est une vue en coupe d'un exemple de dispositif de transmission de courant, selon un mode de réalisation de l'invention.
La figure 2 montre un tube pour un dispositif de détection d'avarie selon un mode de réalisation de l'invention.
Les figures 3A et 3B montrent deux portions de deux tubes respectifs, selon d'autres modes de réalisation de l'invention.

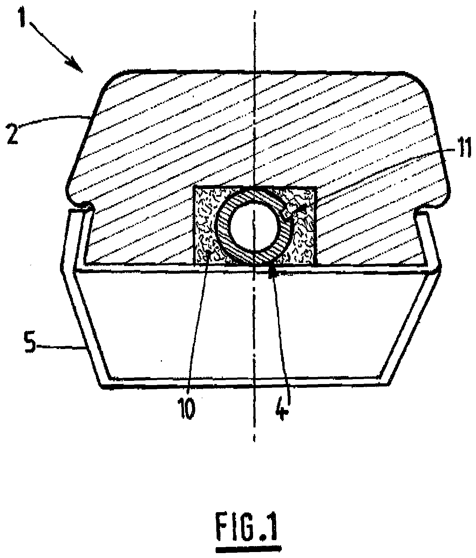

En référence à la figure 1, un dispositif de transmission de courant 1 entre deux éléments mobiles l'un par rapport à l'autre (non représentés), par exemple un pantographe et un fil caténaire, comprend une bande de captage 2 montée sur un moyen de support 5, par exemple un étrier.

La bande de captage 2 définit un évidement 10 dans lequel est reçu un tube étanche 4. Ce tube étanche est réalisé en laiton. Ce tube définit une rainure longitudinale 11. La profondeur d'entaille de cette rainure longitudinale 11 représente entre 30 et 50% de l'épaisseur du tube 4.

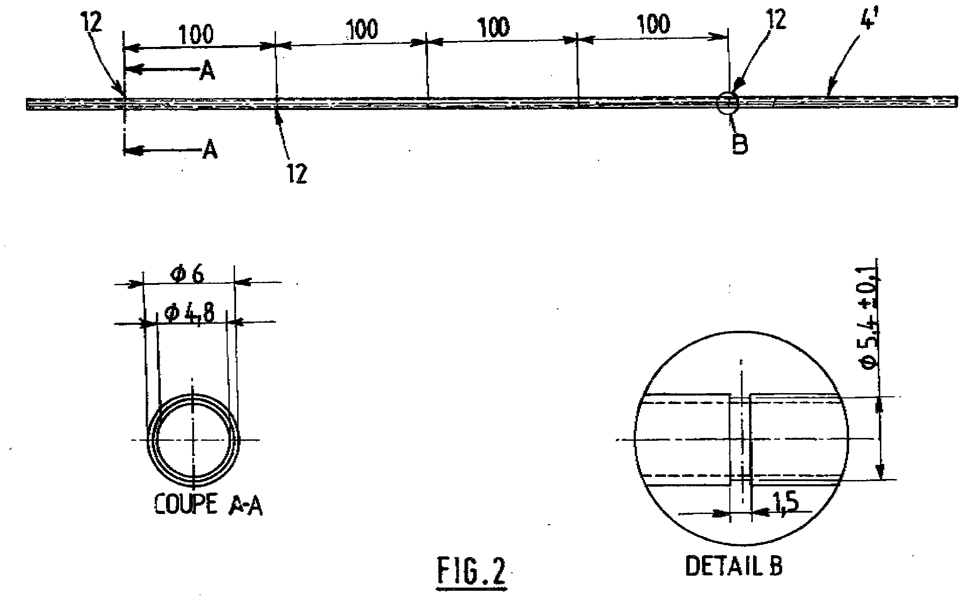

En référence à la figure 2, un tube 4' en laiton définit plusieurs entailles circulaires 12. Le diamètre externe du tube est de 6 mm et le diamètre interne du tube est de 4,8 mm. Dit autrement, l'épaisseur nominale du tube est de 0,6 mm. Chaque rainure 12 a une profondeur d'entaille de sensiblement 0,3 mm et une largeur de 1,5 mm, la section de chaque rainure étant ici rectangulaire. Les entailles circulaires 12 sont espacées les unes des autres de 100 mm environ. Le tube a une longueur totale de 690 mm.

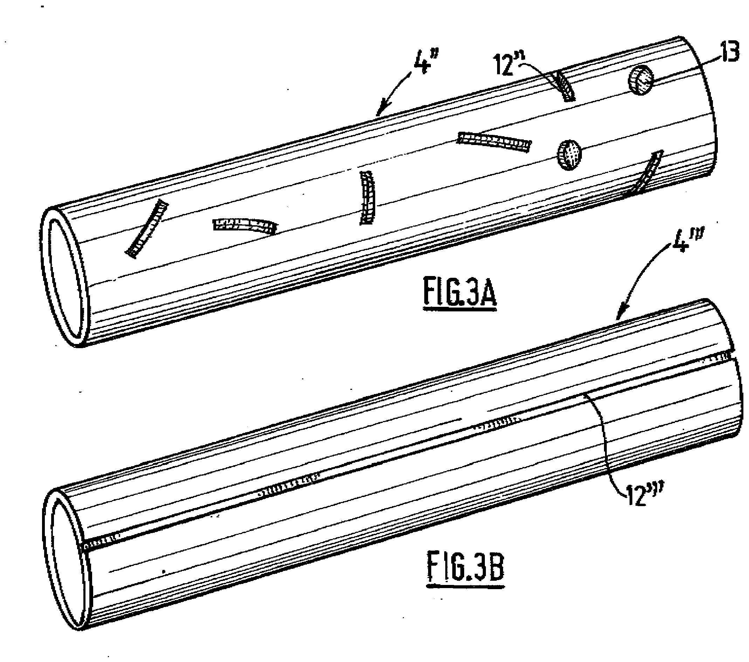

En référence à la figure 3A, un tube 4" peut être aminci localement de façon à former des entrailles rectilignes 12", s'étendant suivant des direction variées, et réparties sur la surface du tube 4". On a également creusé des trous circulaires 13 non débouchant à la surface du tube 4".

Dans le mode de réalisation de la figure 3B, un tube 4'" peut définir une rainure rectiligne 12"', s'étendant suivant la direction longitudinale du tube 4"', sur la portion du tube représentée ou bien sur toute la longueur du tube 4"'.

Des essais ont été réalisés sur divers échantillons. On a cherché à sélectionner les échantillons satisfaisant au critère d'énergie de résilience suivant : 0,8 J à 0,999J, avantageusement 0,85 à 0,95 J, avantageusement 0,90 J, en un seul choc.

Les matériaux testés ont été choisis de façon à satisfaire aux exigences de tenue thermique de la norme CENELEC 50406.

On a pratiqué des tests de résilience CHARPY sur les tubes testés, au moyen d'un mouton de CHARPY-ZWICK, ces tests étant conformes à la norme européenne EN ISO 179.

De manière générale, les tubes en carbone présentent une résistance au choc assez faible, et croissant avec les dimensions du tube :
- 0,076 J pour un tube carbone de diamètre interne 4 mm et de diamètre externe 6 mm (CarbD4-6),
- 0,274 J pour un tube carbone de diamètre interne 6 mm et de diamètre externe 10 mm (CarbD6-10).

Dans le cas de tubes en cuivre, les tests ont montré que la résistance au choc dépend davantage de l'épaisseur de matière laissée après entaille que du diamètre du tube. Ainsi, pour un tube en cuivre dénué d'entaille, de diamètre interne 5,34 mm et de diamètre externe 6 mm, c'est-à-dire d'épaisseur 0,33 mm (CuD5,34-6), un choc d' 1 J n'entraine ni casse ni fissure. En revanche, pour des tubes en cuivre de diamètre interne 6,8 mm et de diamètre externe 8 mm, c'est-à-dire d'épaisseur 0,6 mm (CuD6,8-8) avec des entailles diverses, circulaires, sur des sections du tube perpendiculaires à la direction longitudinale, on obtient les résultats suivants :
- 0,765 J pour une entaille de 0,25 mm de profondeur,
- 0,72 J pour deux entailles de 0,25 mm de profondeur distantes l'une de l'autre de 2 mm,
- 0,037J pour une entaille de 0,45 mm de profondeur (soit 0,15 mm de matière restante).

Pour un tube en cuivre de diamètre interne 2 mm et de diamètre externe de 4 mm, une épaisseur de matière restante au niveau de la discontinuité de 0,2 mm conduit à des énergies de 0, 849J, et 0,803J (pour 2 essais respectifs) ; une épaisseur de matière restante au niveau de la discontinuité de 0,3 mm conduit à des énergies de 0,955 J, 0,998J et 0,998J (pour 3 essais respectifs).

Pour un tube en cuivre de diamètre interne 3,5 mm et de diamètre externe de 6 mm, une épaisseur de matière restante au niveau de la discontinuité de 0,40 mm conduit à des énergies de 0,997 J, 0,557 J, 0,530J, 0,147J, 0,997J et 0,179J (pour 6 essais respectifs). Ces résultats sont relativement peu satisfaisants du fait de leur faible répétabilité.

Pour les tubes en laiton, il est avantageux que les tubes définissent des entailles laissant entre 0,35 mm et 0,28 mm, avantageusement entre 0,325 mm et 0,30 mm, d'épaisseur de matériau restantes. Cette dernière plage de valeurs permet d'obtenir une casse à chaque essai.

Ainsi, pour 7 essais réalisés avec des tubes de laiton de 0,6 mm d'épaisseur (LaitonD4,8-6), définissant chacun une entaille circulaire sur une section du tube perpendiculaire à la direction longitudinale, profonde de 0,275 mm, on obtient les valeurs d'énergie suivantes : 0,861 J, 0,804 J, 0,870 J, 0,982 J, 0,960 J, 0,892 J et 0,925 J.

Pour 7 essais réalisés avec des tubes de laiton de 0,6 mm d'épaisseur (LaitonD4,8-6), définissant chacun une entaille circulaire sur une section du tube perpendiculaire à la direction longitudinale, profonde 0,3 mm, on obtient les valeurs d'énergie suivantes : 0,836 J, 0,823 J, 0,802 J, 0,785 J, 0,794 J, 0,801 J et 0,703 J.

Des essais ont été réalisés avec des tubes de laiton de 0,6 mm d'épaisseur (LaitonD4,8-6), définissant chacun une entaille circulaire sur une section du tube perpendiculaire à la direction longitudinale, profonde de 0,25 mm. On obtient alors des résultats moins répétables, avec pour 4 essais des valeurs d'énergie entre 0,994 et 0,998 J, pour deux essais une fissuration et pour un essai ni casse ni fissure.

Des essais ont été réalisés avec des tubes de laiton de 0,6 mm d'épaisseur (LaitonD4,8-6), définissant chacun une entaille circulaire sur une section du tube perpendiculaire à la direction longitudinale, profonde de 0,5 mm. On obtient là aussi des résultats avec relativement peu de reproductibilité : 5 des 7 essais réalisés conduisent à des valeurs d'énergie entre 0, 943 J et 0,997 J, tandis que 2 essais conduisent à une fissuration.

Dans la présente demande, chaque fois qu'une plage de valeurs est donnée pour un paramètre, il faut comprendre que les bornes sont incluses, même si cela n'est pas précisé.

## Revendications

1. Dispositif de détection d'avarie d'une bande de captage (2) d'un dispositif de transmission de courant (1) entre deux éléments mobiles l'un par rapport à l'autre, comprenant un tube (4) réalisé en un matériau rigide conçu pour contenir un fluide sous pression lorsque fermé, et destiné à être fixé entre la bande de captage et un moyen de support (5) de cette bande, l'ensemble formé par la bande de captage, le tube et le moyen de support étant destiné à être monté sur l'un des éléments mobiles de façon à ce que l'intérieur de ce tube soit alors en communication fluide avec des moyens de détection d'une variation de pression,
**caractérisé en ce que**
le tube présente au moins une discontinuité (11) créant un amincissement local de l'épaisseur dudit tube, ledit amincissement local correspondant à une épaisseur restante de matière comprise entre 0,20 mm et 0,40 mm, et **en ce que** ledit tube (4, 4', 4", 4'") est réalisé en laiton.

2. Dispositif selon la revendication 1, dans lequel le tube (4, 4') définit au moins une rainure circulaire (11, 12) sur une section dudit tube.

3. Dispositif selon la revendication 2, dans lequel le tube définit au moins deux rainures circulaires sur une section dudit tube, lesdites rainures étant espacées de moins d'un centimètre.

4. Dispositif selon l'une des revendications 1 à 3, dans lequel, pour au moins une discontinuité, l'épaisseur de matériau au niveau de l'amincissement local représente entre 50% et 60% de l'épaisseur du tube (4).

5. Dispositif selon la revendication 4, dans lequel, pour au moins une discontinuité, l'épaisseur de matériau au niveau de l'amincissement local représente entre 50% et 55% de l'épaisseur du tube (4).

6. Dispositif selon l'une des revendications 1 à 5, dans lequel l'épaisseur du tube est entre 0,5 mm et 1 mm.

7. Dispositif selon l'une des revendications 1 à 6, dans lequel
le tube a un diamètre intérieur variant entre 2 et 4,9 mm, et un diamètre extérieur entre 3 et 6,5 mm, et
pour au moins une discontinuité, l'épaisseur restante varie entre 0,25 mm et 0,33 mm.

8. Dispositif selon l'une des revendications 1 à 6, dans lequel
le tube a un diamètre intérieur compris entre 6,5 et 8,6 mm, et un diamètre extérieur entre 7,8 et 8,8 mm, et
pour au moins une discontinuité, l'épaisseur restante varie entre 0,2 mm et 0,40 mm.

9. Dispositif selon l'une des revendications 1 à 8, dans lequel ladite épaisseur de matière restante varie entre 0,30 mm et 0,325 mm.

10. Dispositif de transmission de courant (1) entre deux éléments mobiles l'un par rapport à l'autre comprenant :
- une bande de captage (2) destinée à frotter contre l'un des éléments mobiles,
- un moyen de support (5) sur lequel est monté la bande de captage, destiné à être solidarisée à l'autre élément mobile,
- un dispositif de détection d'avarie selon l'une des revendications précédentes, dans lequel le tube (4) est fixé entre la bande de captage et le moyen de support, et est raccordable à des moyens de détection d'une variation de pression.

11. Système de transmission de courant comprenant le dispositif (1) selon la revendication 10, ainsi que l'élément mobile auquel est solidarisé le moyen de support.

12. Système selon la revendication 11, dans lequel l'élément mobile auquel est solidarisé le support comporte un pantographe.

## Patentansprüche

1. Vorrichtung zur Erkennung von Defekten eines Abgriffbandes (2) einer Stromübertragungsvorrichtung (1) zwischen zwei beweglichen Elementen zueinander, umfassend ein aus einem starren Material gefertigtes Rohr (4), das gestaltet ist, um, wenn es geschlossen ist, ein unter Druck stehendes Fluid zu enthalten, und dazu bestimmt, zwischen dem Abgriffband und einem Trägermittel (5) dieses Bandes befestigt zu werden, wobei die durch das Abgriffband, das Rohr und das Trägermittel gebildete Baugruppe dazu bestimmt ist, derart auf einem der beweglichen Elemente montiert zu werden, dass das Innere dieses Rohres in Fluidverbindung mit Mitteln zur Erkennung einer Druckvariation ist,
**dadurch gekennzeichnet, dass**
das Rohr mindestens eine Diskontinuität (11) aufweist, die eine lokale Ausdünnung der Dicke des Rohres schafft, wobei die lokale Ausdünnung einer Materialrestdicke entspricht, die zwischen 0,20 mm und 0,40 mm enthalten ist, und dadurch, dass das Rohr (4, 4', 4'', 4''') aus Messing gefertigt ist.

2. Vorrichtung nach Anspruch 1, wobei das Rohr (4, 4') mindestens eine kreisförmige Nut (11, 12) an einem Abschnitt des Rohres definiert.

3. Vorrichtung nach Anspruch 2, wobei das Rohr mindestens zwei kreisförmige Nuten an einem Abschnitt des Rohres definiert, wobei die Nuten um mindestens einen Zentimeter beabstandet sind.

4. Vorrichtung nach einem der Ansprüche 1 bis 3, wobei bei mindestens einer Diskontinuität die Materialdicke im Bereich der lokalen Ausdünnung zwischen 50 % und 60 % der Dicke des Rohres (4) darstellt.

5. Vorrichtung nach Anspruch 4, wobei bei mindestens einer Diskontinuität die Materialdicke im Bereich der lokalen Ausdünnung zwischen 50 % und 55 % der Dicke des Rohres (4) darstellt.

6. Vorrichtung nach einem der Ansprüche 1 bis 5, wobei die Dicke des Rohres zwischen 0,5 mm und 1 mm beträgt.

7. Vorrichtung nach einem der Ansprüche 1 bis 6, wobei das Rohr einen Innendurchmesser, der zwischen 2 und 4,9 mm variiert, und einen Außendurchmesser zwischen 3 und 6,5 mm aufweist, und
bei mindestens einer Diskontinuität die Restdicke zwischen 0,25 mm und 0,33 mm variiert.

8. Vorrichtung nach einem der Ansprüche 1 bis 6, wobei das Rohr einen Innendurchmesser zwischen 6,5 und 8,6 mm, und einen Außendurchmesser zwischen 7,8 und 8,8 mm aufweist, und
bei mindestens einer Diskontinuität die Restdicke zwischen 0,2 mm und 0,40 mm variiert.

9. Vorrichtung nach einem der Ansprüche 1 bis 8, wobei die Restmaterialdicke zwischen 0,30 mm und 0,325 mm variiert.

10. Stromübertragungsvorrichtung (1) zwischen zwei beweglichen Elementen zueinander, Folgendes umfassend:
- ein Abgriffband (2), das dazu bestimmt ist, sich an einem der beweglichen Elemente zu reiben,
- ein Trägermittel (5), auf dem das Abgriffband montiert ist, das dazu bestimmt ist, fest mit dem anderen beweglichen Element verbunden zu sein,
- eine Vorrichtung zur Erkennung von Defekten nach einem der vorstehenden Ansprüche, wobei das Rohr (4) zwischen dem Abgriffband und dem Trägermittel befestigt ist, und an Mittel zur Erkennung einer Druckvariation anschließbar ist.

11. Stromübertragungssystem, umfassend die Vorrichtung (1) nach Anspruch 10, sowie das bewegliche Element, mit dem das Trägermittel fest verbunden ist.

12. System nach Anspruch 11, wobei das bewegliche Element, mit dem das Trägermittel fest verbunden ist, ein Pantograph ist.

## Claims

1. A device for detecting a damage of a contact strip (2) of a current transmission device (1) between two elements which can be moved relative to each other, comprising a tube (4) which is produced from a rigid material and which is configured to contain a pressurized fluid when closed, and which is intended to be fixed between the contact strip and a means (5) for supporting this strip, the assembly formed by the contact strip, the tube and the support means being intended to be mounted on one of the movable elements so that the interior of this tube is in fluid communication with means for detecting a pressure variation,
**characterized in that**
the tube has at least one discontinuity (11) which creates a local thinning of the thickness of the tube, the said local thinning corresponding to a remaining thickness of the material comprised between 0.20 mm and 0.40 mm, and **in that** the tube (4, 4', 4", 4"') is produced from brass.

2. The device as claimed in claim 1, wherein the tube (4, 4') defines at least one circular groove (11, 12) over a cross-section of the tube.

3. The device as claimed in claim 2, wherein the tube defines at least two circular grooves over a cross-section of the said tube, the grooves being spaced apart from each other by less than one centimeter.

4. The device as claimed in one of claims 1 to 3, wherein, for at least one discontinuity, the material thickness at the local thinning represents between 50% and 60% of the thickness of the tube (4).

5. The device as claimed in claim 4, wherein, for at least one discontinuity, the material thickness at the local thinning represents between 50% and 55% of the thickness of the tube (4).

6. The device as claimed in one of claims 1 to 5, wherein the thickness of the tube is between 0.5 mm and 1 mm.

7. The device as claimed in one of claims 1 to 6, wherein
the tube has an inner diameter which varies between 2 and 4.9 mm, and an outer diameter between 3 and 6.5 mm, and
for at least one discontinuity, the remaining thickness varies between 0.25 mm and 0.33 mm.

8. The device as claimed in one of claims 1 to 6, wherein
the tube has an inner diameter of between 6.5 and 8.6 mm, and an outer diameter of between 7.8 and 8.8 mm, and
for at least one discontinuity, the remaining thickness varies between 0.2 mm and 0.40 mm.

9. The device as claimed in one of claims 1 to 8, wherein the said thickness of the remaining material varies between 0.30 mm and 0.325 mm.

10. A current transmission device (1) between two elements which can be moved relative to each other, comprising:
- a contact strip (2) which is intended to slide against one of the movable elements,
- a support means (5) on which the contact strip is mounted, and which is intended to be fixedly joined to the other movable element,
- a damage detection device as claimed in one of the preceding claims, wherein the tube (4) is fixed between the contact strip and the support means, and can be connected to means for detecting a pressure variation.

11. A current transmission system comprising the device (1) as claimed in claim 10, and the movable element to which the support means is fixedly joined.

12. The system as claimed in claim 11, wherein the movable element to which the support is fixedly joined comprises a pantograph.
